# EUROPEAN PATENT SPECIFICATION

(11) **EP 3 882 053 B1**
(45) Date of publication and mention of the grant of the patent: **14.02.2024**
(21) Application number: 19884241.1
(22) Date of filing: 18.06.2019
(51) Int. Cl.: B60C 11/03, B60C 11/13

(54) **PNEUMATIC TIRE**
LUFTREIFEN
BANDAGE PNEUMATIQUE

(30) Priority: 12.11.2018 JP 2018212230
(43) Date of publication of application: 22.09.2021
(73) Proprietor: The Yokohama Rubber Co., Ltd., Kanagawa Prefecture, 254-8601 (JP)
(72) Inventor: NAGASAWA, Hideki, Hiratsuka-shi, Kanagawa 254-8601 (JP)
(74) Representative: Dilg, Haeusler, Schindelmann Patentanwaltsgesellschaft mbH
(86) International application number: PCT/JP2019/024157
(87) International publication number: WO 2020/100336

(56) References cited:
- EP-A1- 2 452 836
- WO-A1-2009/054310
- WO-A1-2015/174413
- JP-A- H0 761 210
- JP-A- H1 086 613
- JP-A- H08 183 311
- JP-A- 2011 042 328
- JP-A- 2015 229 408
- JP-A- 2017 132 470

## Description

### Technical Field

The invention relates to a pneumatic tire and particularly relates to a pneumatic tire that can provide wet traction performance and wear resistance performance in a compatible manner while improving tire rolling resistance.

### Background Art

In recent years, for heavy duty tires mounted in buses traveling in urban areas, tread patterns with three circumferential main grooves and four rows of land portions have been employed to improve the wear resistance performance of the tires. An example of a conventional pneumatic tire that is configured in this manner is the technology described in Patent Document 1.

### Citation List

### Patent Literature

Patent Document 1: JP 1989-160709A

JP H07 61210 A discloses a pneumatic tire capable of reducing passing noise while maintaining various running performances such as steering stability and wet grip performance during rainy weather.

JP 2017 132470 A discloses a pneumatic tire capable of improving on-snow performance while maintaining on-ice performance.

WO 2009/054310 A1 discloses a pneumatic tire having good water discharge and anti-noise characteristics.

WO 2015/174413 A1 discloses a rehabilitated tire, and more particularly a rehabilitated tire capable of improving wet performance.

EP 2 452 836 A1 discloses a heavy duty pneumatic tire capable of maintaining on-ice performance without being influenced by magnitude of a tire load and a tire pressure.

### Summary of Invention

### Technical Problem

Additionally, there is a demand for providing both wet traction performance and wear resistance performance in heavy duty tires.

An object of the invention is to provide a pneumatic tire that can provide both wet traction performance and wear resistance performance in a compatible manner while improving tire rolling resistance.

### Solution to Problem

To achieve the object described above, a pneumatic tire according to an embodiment of the invention includes a pair of shoulder main grooves and a single center main groove, and a pair of shoulder land portions and a pair of center land portions that are defined by the main grooves, a groove width Wg2 of the center main groove having a relationship Wg2 < Wg1 and 0.60 ≤ Wg2/Wg1 ≤ 0.75 with a groove width Wg1 of the shoulder main groove and a groove width W1 of the circumferential narrow groove is in a range of 0.5 mm ≤ W1 ≤ 2.0 mm, a distance Wce between outer side edge portions in a tire width direction of the pair of center land portions having a relationship 0.50 ≤ Wce/TW with a tread width TW, a width Wr2 of the center land portion having a relationship 0.23 ≤ Wr2/TW ≤ 0.27 with the tread width TW, and the center land portion including a circumferential narrow groove extending in a tire circumferential direction.

### Advantageous Effects of Invention

In the pneumatic tire according to an embodiment of the invention, the center main groove is set narrower than the shoulder main groove, and the ground contact width of the tread portion center region is set being large, and thus the rigidity of the center land portion located in a direct ground contact position is reinforced. This has the advantage of improving the wear resistance performance and also has the advantage of suppressing deformation of the land portions to improve the low rolling resistance performance of the tire. Additionally, the center land portion includes the circumferential narrow groove, thus distributing the ground contact pressure in the tread portion center region. This has the advantage of making the ground contact pressure distribution within the tire ground contact surface uniform, improving the uneven wear performance of the tire.

### Brief Description of Drawings

FIG. 1 is a cross-sectional view in a tire meridian direction illustrating a pneumatic tire according to an embodiment of the invention.
FIG. 2 is a plan view illustrating a tread surface of the pneumatic tire illustrated in FIG. 1.
FIG. 3 is a plan view illustrating a tread portion center region of the pneumatic tire illustrated in FIG. 2.
FIG. 4 is an enlarged view illustrating a center land portion illustrated in FIG. 3.
FIG. 5 is a cross-sectional view of the center land portion illustrated in FIG. 4, the view being taken along line A.
FIG. 6 is a cross-sectional view of the center land portion illustrated in FIG. 4, the view being taken along line B.
FIG. 7 is a plan view illustrating a tread portion shoulder region of the pneumatic tire illustrated in FIG. 2.
FIG. 8 is an explanatory diagram illustrating a modified example of the center land portion illustrated in FIG. 2.
FIG. 9 is an explanatory diagram illustrating a modified example of the center land portion illustrated in FIG. 2.
FIG. 10 is an explanatory diagram illustrating a modified example of the center land portion illustrated in FIG. 2.
FIG. 11 is a table indicating the results of performance tests of pneumatic tires according to embodiments of the invention.

### Description of Embodiments

Embodiments of the invention are described in detail below with reference to the drawings. However, the invention is not limited to these embodiments but only by the appended claims.

### Pneumatic tire

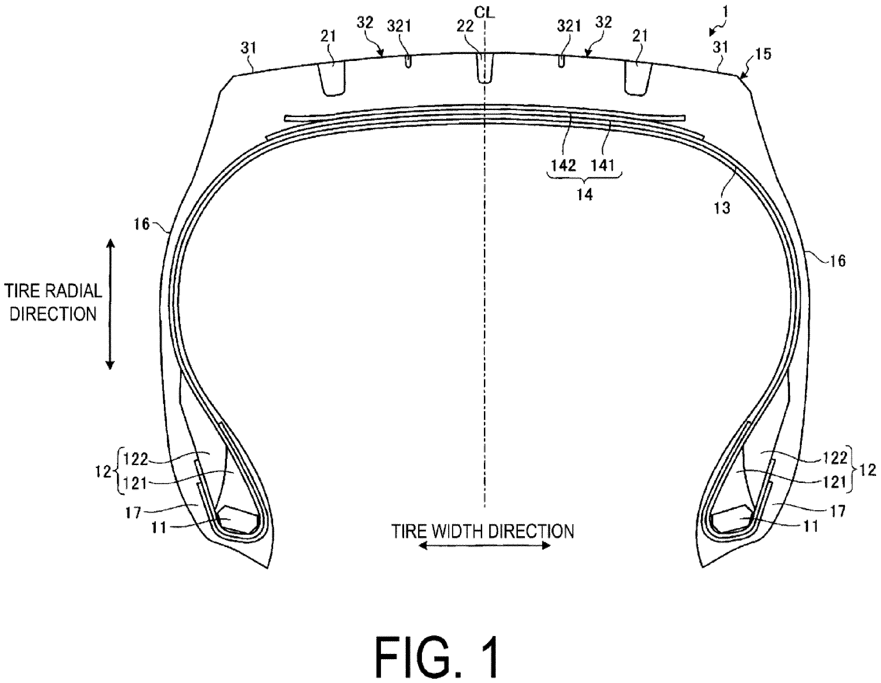

FIG. 1 is a cross-sectional view in a tire meridian direction illustrating a pneumatic tire according to an embodiment of the invention. The same drawing illustrates a cross-sectional view of a half region in the tire radial direction. Additionally, the same drawing illustrates a heavy duty tire for trucks and buses as an example of a pneumatic tire.

In reference to the same drawing, "cross section in a tire meridian direction" refers to a cross section of the tire taken along a plane that includes the tire rotation axis (not illustrated). Reference sign CL denotes the tire equatorial plane and refers to a plane normal to the tire rotation axis that passes through the center point of the tire in the tire rotation axis direction. "Tire width direction" refers to the direction parallel with the tire rotation axis. "Tire radial direction" refers to the direction perpendicular to the tire rotation axis.

A pneumatic tire 1 has an annular structure with the tire rotation axis as its center and includes: a pair of bead cores 11, 11, a pair of bead fillers 12, 12, a carcass layer 13, a belt layer 14, a tread rubber 15, a pair of sidewall rubbers 16, 16, and a pair of rim cushion rubbers 17, 17 (see FIG. 1).

The pair of bead cores 11, 11 are formed by winding one or a plurality of bead wires made of steel multiple times in an annular shape and are embedded in the bead portion to constitute a core of the left and right bead portions. The pair of bead fillers 12, 12 are respectively disposed on an outer circumference of the pair of bead cores 11, 11 in the tire radial direction and reinforce the bead portions.

The carcass layer 13 has a single layer structure made from one carcass ply or a multilayer structure made from a plurality of stacked carcass plies and spans between the left and right bead cores 11, 11 in a toroidal shape to form the framework of the tire. Additionally, both end portions of the carcass layer 13 are turned back to the outer side in the tire width direction so as to wrap around the bead cores 11 and the bead fillers 12 and fixed. Additionally, the carcass ply of the carcass layer 13 is made by performing rolling processing on a plurality of carcass cords made of steel or an organic fiber material (e. g., aramid, nylon, polyester, rayon, or the like) and covered with coating rubber. The carcass ply has a carcass angle (defined as the inclination angle of a longitudinal direction of the carcass cords with respect to a tire circumferential direction), as an absolute value of 80 degrees or greater and 90 degrees or smaller.

The belt layer 14 is a multilayer structure including a pair of cross belts 141, 142 and is disposed around the outer circumference of the carcass layer 13. The pair of cross belts 141, 142 are made by performing a rolling process on coating rubber-covered belt cords made from steel or an organic fiber material. The cross belts 141, 142 have a belt angle, as an absolute value, ranging from 15° to 55°. Furthermore, the pair of cross belts 141, 142 have belt angles (defined as the inclination angle in the longitudinal direction of the belt cords with respect to the tire circumferential direction) of opposite signs and are stacked so that the longitudinal directions of the belt cords intersect each other (a so-called crossply structure).

The tread rubber 15 is disposed on the outer circumference of the carcass layer 13 and the belt layer 14 in the tire radial direction and constitutes a tread portion. The pair of sidewall rubbers 16, 16 are disposed on the outer side of the carcass layer 13 in the tire width direction and constitute left and right sidewall portions. The pair of rim cushion rubbers 17, 17 extend from the inner sides in the tire radial direction of the turned back portions of the carcass layer 13 and the left and right bead cores 11, 11 toward the outer side in the tire width direction to form a rim-fitting surface of the bead portion.

### Tread Pattern

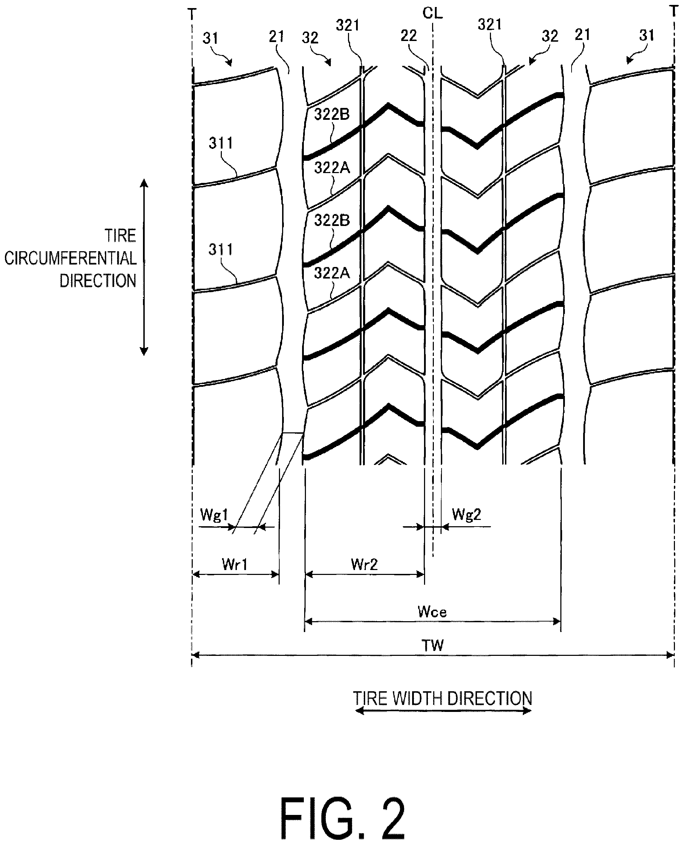

FIG. 2 is a plan view illustrating a tread surface of the pneumatic tire 1 illustrated in FIG. 1. In reference to the same drawing, "tire circumferential direction" refers to the direction revolving about the tire rotation axis. In addition, reference sign T denotes a tread end, and a dimension symbol TW denotes a tread width. In the configuration illustrated in FIG. 2, the pneumatic tire 1 includes a square-shaped shoulder portion, and the tread end T corresponds to a tire ground contact edge.

As illustrated in FIG. 2, the pneumatic tire 1 includes, in a tread surface, three circumferential main grooves 21, 22 extending in the tire circumferential direction and four land portions 31, 32 defined by the circumferential main grooves 21, 22.

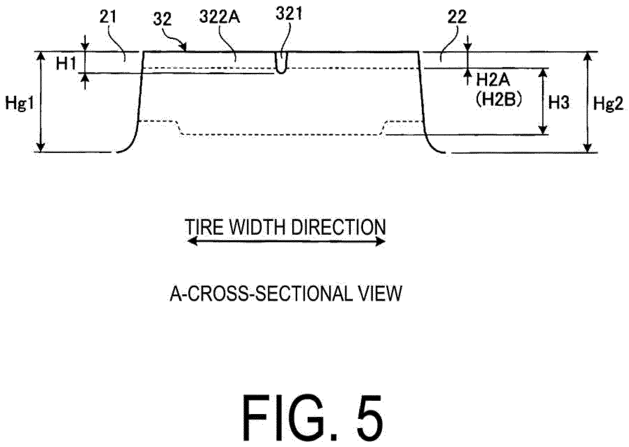

"Main groove" refers to a groove on which a wear indicator must be provided as specified by JATMA and has, particularly in heavy duty tires, groove widths Wg1, Wg2 (see FIG. 2) of 6.0 mm or more and groove depths Hg1, Hg2 (see FIG. 5) of 10.0 mm or more. Lug grooves described later are lateral grooves extending in the tire width direction and opening when the tire comes into contact with the ground to function as grooves. Additionally, sipes described below are notches formed in the tread contact surface and distinguished from the lug grooves in that the sipes close when the tire comes into contact with the ground.

The groove width is measured as the distance between the left and right groove walls at the groove opening portion when the tire is mounted on a specified rim, inflated to the specified internal pressure, and in an unloaded state. In a configuration in which the land portions include notch portions or chamfered portions in the edge portions thereof, the groove width is measured with reference to the intersection points between the tread contact surface and the extension lines of the groove walls as measurement points, in a cross-sectional view in which the groove length direction is a normal direction.

The groove depth is the maximum distance from the tread contact surface to the groove bottom and is measured when the tire is mounted on a specified rim, inflated to the specified internal pressure, and in an unloaded state. Additionally, in a configuration in which the grooves include an uneven portion or sipes on the groove bottom, the groove depth is measured excluding these portions.

"Specified rim" refers to a "standard rim" defined by JATMA, a "Design Rim" defined by TRA, or a "Measuring Rim" defined by ETRTO. Additionally, "specified internal pressure" refers to a "maximum air pressure" defined by JATMA, to the maximum value in "TIRE LOAD LIMITS AT VARIOUS COLD INFLATION PRESSURES" defined by TRA, or to "INFLATION PRESSURES" defined by ETRTO. Additionally, "specified load" refers to a "maximum load capacity" defined by JATMA, the maximum value in "TIRE LOAD LIMITS AT VARIOUS COLD INFLATION PRESSURES" defined by TRA, or "LOAD CAPACITY" defined by ETRTO. However, in the case of JATMA, for a passenger vehicle tire, the specified internal pressure is an air pressure of 180 kPa, and the specified load is 88% of the maximum load capacity at the specified internal pressure.

For example, in the configuration of FIG. 2, the pneumatic tire 1 has an approximately point symmetric tread pattern having a center point on the tire equatorial plane CL. However, no such limitation is intended, and, for example, the pneumatic tire 1 may have a left-right axisymmetric tread pattern or a left-right asymmetric tread pattern with respect to the tire equatorial plane CL as the center and may have a tread pattern having directionality in the tire rotation direction (not illustrated).

Additionally, of the three circumferential main grooves 21, 22, two circumferential main grooves 21, 21 on the outer side in the tire width direction are defined as shoulder main grooves, and the circumferential main groove 22 on the inner side in the tire width direction is defined as a center main groove. Note that in the configuration of FIG. 2, the center main groove 22 is on the tire equatorial plane CL.

The land portion 31 located on the outer side in the tire width direction defined by the shoulder main groove 21 is defined as a shoulder land portion. The shoulder land portion 31 is a land portion on the outermost side in the tire width direction and is located on a tread end T. Additionally, the land portions 32 located on the inner side in the tire width direction defined by the shoulder main grooves 21 are defined as center land portions. The center land portion 32 may be disposed at a position away from a tire equatorial plane CL (see FIG. 2) or may be disposed on the tire equatorial plane CL (not illustrated).

### Tread Portion Center Region

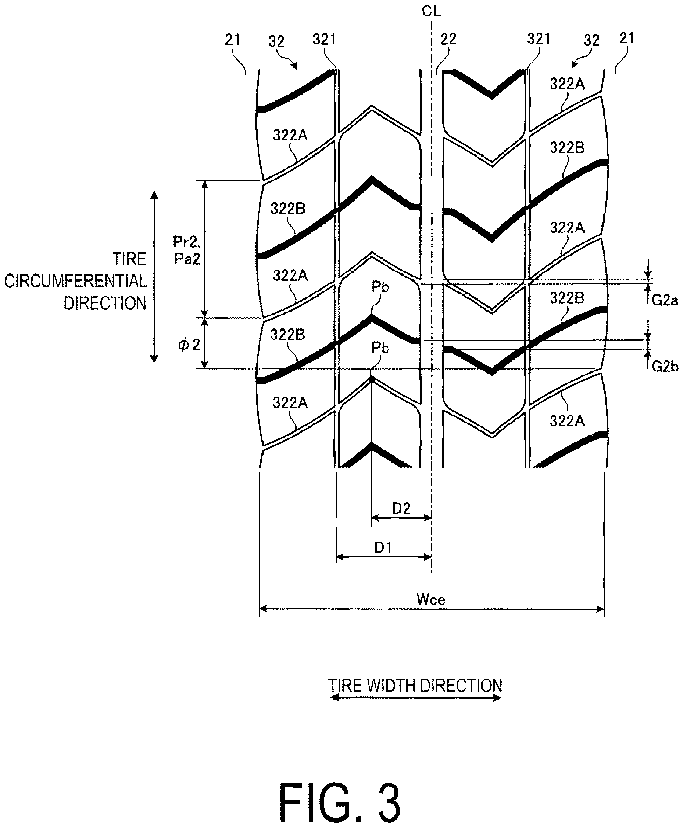

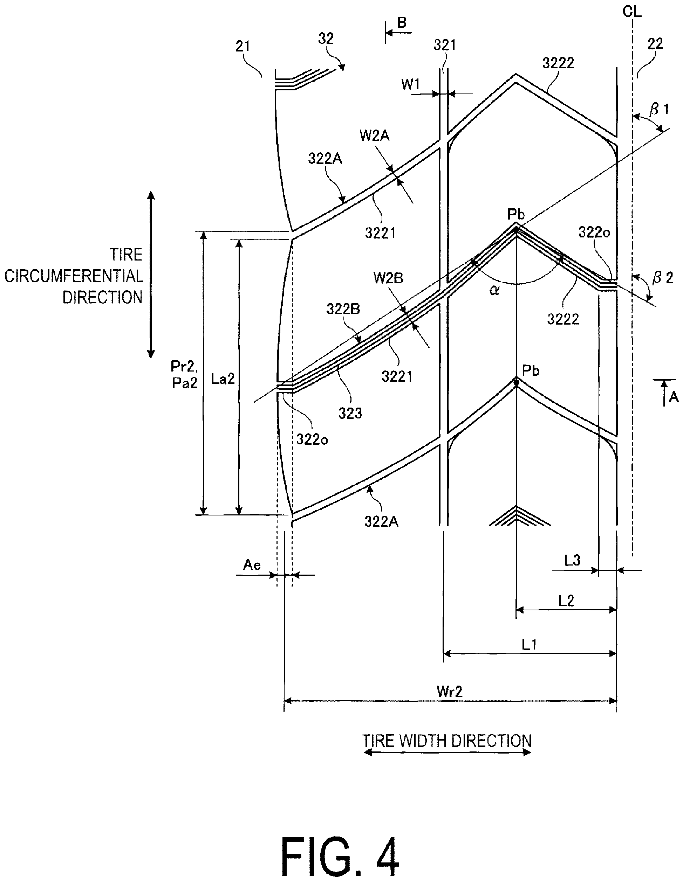

FIG. 3 is a plan view illustrating the tread portion center region of the pneumatic tire 1 illustrated in FIG. 2. FIG. 4 is an enlarged view illustrating the center land portion 32 illustrated in FIG. 3.

As illustrated in FIG. 2, in the pneumatic tire 1, the center main groove 22 has a narrow structure, and the center land portion 32 has a wide structure. Accordingly, the ground contact area of the tread portion center region is increased to reduce the rolling resistance of the tire, and the drainage properties of the tread portion center region are also ensured due to the presence of the center main groove 22. Specifically, the following configurations are adopted.

First, the groove width Wg2 of the center main groove 22 is smaller than the groove width Wg1 of the shoulder main groove 21 (Wg2 < Wg1). Additionally, the groove width Wg2 of the center main groove 22 has a relationship 0.60 ≤ Wg2/Wg1 ≤ 0.75 and preferably a relationship 0.65 ≤ Wg2/Wg1 ≤ 0.70 with the groove width Wg1 of each of the shoulder main grooves 21. Additionally, the groove width Wg2 of the center main groove 22 preferably has a relationship 0.02 ≤ Wg2/TW ≤ 0.04 with the tread width TW. Additionally, the groove depth of the center main groove 22 is 10 mm or more. Accordingly, the groove volume of the center main groove 22 is ensured.

The tread width TW is measured as the linear distance between both ends of a tread pattern portion of the tire in a case where the tire is mounted on the specified rim, inflated to the specified internal pressure, and in the unloaded state.

The tread end T is defined as both ends of the tread pattern portion of the tire.

A distance Wce between the outer side edge portions in the tire width direction of the pair of center land portions 32, 32 has a relationship 0.50 ≤ Wce/TW with the tread width TW. The upper limit of Wce/TW is not particularly limited, but is subject to restrictions by the upper limit of the ratio Wg2/TW described above and the upper limit of a ratio Wr2/TW described below.

The distance Wce between the edge portions is measured as a distance in the tire width direction in a case where the tire is mounted on the specified rim, inflated to the specified internal pressure, and in the unloaded state. Additionally, in a configuration in which the edge portion of the land portion has a wave-like shape or a zigzag shape, the distance between the edge portions is measured using the center line of the amplitude of the wave-like shape or the zigzag shape as a measurement point.

Additionally, in FIG. 2, a width Wr2 of the center land portion 32 has a relationship 0.23 ≤ Wr2/TW ≤ 0.27 with the tread width TW. In addition, the ratio Wr2/TW is preferably in the range 0.24 ≤ Wr2/TW ≤ 0.26. Additionally, the width Wr2 of the center land portion 32 is preferably larger than the width Wr1 of the shoulder land portion 31 (Wr1 < Wr2), and specifically, preferably has a relationship 1.30 ≤ Wr2/Wr1 ≤ 1.80 and more preferably a relationship 1.35 ≤ Wr2/Wr1 ≤ 1.60 with the width Wr1.

The width of the land portion is measured as a distance in the tire width direction in a case where the tire is mounted on the specified rim, inflated to the specified internal pressure, and in the unloaded state. Additionally, in a configuration in which the edge portion of the land portion has a wave-like shape or a zigzag shape, the distance between the edge portions is measured using the center line of the amplitude of the wave-like shape or the zigzag shape as a measurement point (see FIG. 4).

### Circumferential Narrow Groove and Lug Groove of Center Land Portion

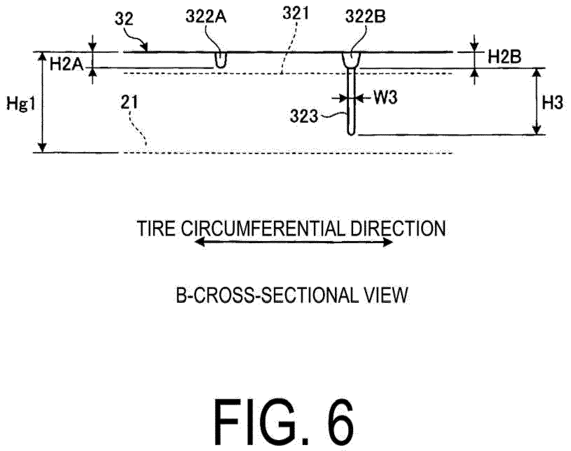

FIGS. 5 and 6 are cross-sectional views of the center land portion 32 illustrated in FIG. 4, the views being taken along line A (FIG. 5) and line B (FIG. 6).

As illustrated in FIG. 2, the center land portion 32 includes a single circumferential narrow groove 321 and a plurality of lug grooves 322A, 322B.

As illustrated in FIG. 2, the circumferential narrow groove 321 extends around the entire circumference in the tire circumferential direction to divide the center land portion 32 in the tire width direction. In the configuration of FIG. 2, the circumferential narrow groove 321 has a straight shape. However, no such limitation is intended, and the circumferential narrow groove 321 may have a zigzag shape or a wave-like shape having an amplitude in the tire width direction (not illustrated).

In the configuration described above, the center main groove 22 is set narrower than the shoulder main groove 21 (Wg2 < Wg1), and the ground contact width of the tread portion center region is set being large (0.50 ≤ Wce/TW and 0.23 ≤ Wr2/TW), and thus the rigidity of the center land portion 32 located in a direct ground contact position is reinforced. This improves the wear resistance performance of the tire and also improves the low rolling resistance performance of the tire.

On the other hand, in a configuration generally provided with a wide center land portion, there is a new problem in that uneven wear such as rail wear is likely to occur because the tread portion center region has a large ground contact pressure difference. In this regard, in the configuration described above, the center land portion 32 includes the circumferential narrow groove 321, and thus the ground contact pressure in the tread portion center region is dispersed by the circumferential narrow groove 321. Thus, the ground contact pressure distribution within the tire ground contact surface is made uniform, improving the uneven wear performance of the tire.

Additionally, in FIG. 3, a distance D1 from a tire equatorial plane CL to the groove center line of the circumferential narrow groove 321 has a relationship D1/TW ≤ 0.16 with the tread width TW. The lower limit of the ratio D1/TW is not particularly limited, but is subject to restrictions by the range of a ratio L1/Wr2 described below.

The groove center line of the circumferential narrow groove is defined as the center line of the groove opening portion of the circumferential groove. Additionally, when the circumferential narrow groove has a zigzag shape or a wave-like shape having an amplitude in the tire width direction, the groove center line is defined as the center line of the amplitude.

Additionally, in FIG. 4, the distance L1 from an edge portion on the tire equatorial plane CL side of the center land portion 32 to the groove center line of the circumferential narrow groove 321 preferably has a relationship 0.40 ≤ L1/Wr2 ≤ 0.60 and preferably has a relationship 0.45 ≤ L1/Wr2 ≤ 0.55 with the width Wr2 of the center land portion 32. Accordingly, the circumferential narrow groove 321 is disposed in a center portion of the center land portion 32.

Additionally, a groove width W1 (see FIG. 4) of the circumferential narrow groove 321 is in the range of 0.5 mm ≤ W1 ≤ 2.0 mm. Additionally, the circumferential narrow groove 321 may be a sipe that is closed in a case where the tire contacts the ground.

Furthermore, in FIG. 5, a groove depth H1 of the circumferential narrow groove 321 preferably has a relationship 0.07 ≤ H1/Hg2 ≤ 0.30 and more preferably a relationship 0.07 ≤ H1/Hg2 ≤ 0.15 with a groove depth Hg2 of the center main groove 22. Consequently, the circumferential narrow groove 321 is a narrow shallow groove and disappears during the intermediate term of wear of the tire. However, no such limitation is intended, and as described below, the groove depth H1 of the circumferential narrow groove 321 may be adjusted in relation to the presence of the lug grooves 322A, 322B.

In general, in a configuration including a block row defined by lug grooves, there is a technical problem in that heel and toe wear occurs in the blocks due to a block treading operation and a block kickoff operation during rolling.

In this regard, in the pneumatic tire 1, the lug grooves 322A, 322B extend through the center land portion 32 in the tire width direction and open into the shoulder main groove 21 and the center main groove 22, respectively, as illustrated in FIG. 2. Additionally, the lug grooves 322A, 322B have a V-shape or an L-shape with an apex corresponding to a bent portion Pb (see FIG. 4), and the bent portion Pb is disposed toward the tire circumferential direction. In addition, the plurality of lug grooves 322A, 322B are arranged at predetermined intervals in the tire circumferential direction with bent shapes aligned in the same direction. In such a configuration, the bent shapes of the lug grooves 322A, 322B ensure the rigidity of the blocks defined by the lug grooves 322A, 322B, suppressing heel and toe wear. Thus, the uneven wear resistance performance of the tire is ensured.

Additionally, in FIG. 3, a distance D2 from the tire equatorial plane CL to the bent portion Pb of each of the lug grooves 322A, 322B is in the range of D2/TW ≤ 0.125 with respect to the tread width TW (see FIG. 2). In addition, the bent portion Pb of each of the lug grooves 322A, 322B is formed between the circumferential narrow groove 321 and the tire equatorial plane CL (D2 < D1). The lower limit of the distance D2 is not particularly limited, but is subject to restrictions by the range of a ratio L2/Wr2 described below.

Additionally, in FIG. 3, a distance G2 (G2a; G2b) in the tire circumferential direction between the opening portion of the lug grooves 322A; 322B in one center land portion 32 with respect to the center main groove 22 and the opening portion of corresponding lug grooves 322A; 322B in an other center land portion 32 with respect to the center main groove 22 is in the range of -0.05 ≤ G2/Pr2 ≤ 0.05 with respect to the pitch length Pr2 of the lug grooves 322A; 322B. Accordingly, the opening portions of the opposing lug grooves 322A; 322B are disposed at substantially the same position in the tire circumferential direction.

Additionally, in FIG. 4, a bend angle α of the bent portion Pb of each of the lug grooves 322A, 322B is in the range of 90 deg ≤ α ≤ 150 deg.

The bend angle α is measured as the angle formed by two straight lines connecting the bent portion Pb of the lug groove and the opening portion with respect to the left and right main grooves in the land portion.

Additionally, in FIG. 4, the distance L2 from the edge portion on the tire equatorial plane CL side of the center land portion 32 to the bent portion Pb of each of the lug grooves 322A, 322B is preferably in the range of 0.24 ≤ L2/Wr2 ≤ 0.33 and more preferably in the range of 0.26 ≤ L2/Wr2 ≤ 0.32 with respect to the width Wr2 of the center land portion 32. Additionally, the distance L2 of the bent portion Pb preferably has a relationship 0.40 ≤ L2/L1 ≤ 0.63 with respect to the distance L1 from the edge portion on the tire equatorial plane CL of the center land portion 32 to the groove center line of the circumferential narrow groove 321. Thus, the bent portion Pb of the lug grooves 322A, 322B is disposed in a center portion of the road contact surface of the center land portion 32 defined by the circumferential narrow groove 321.

In FIG. 4, the portion of the lug grooves 322A, 322B that extends without bending from the bent portion Pb toward the shoulder main groove 21 side is defined as the first groove portion 3221, and the portion of each of the lug grooves 322A, 322B that extends without bending from the bent portion Pb toward the center main groove 22 side is defined as the second groove portion 3222.

In the configuration in FIG. 4, the circumferential narrow groove 321 is disposed in the center portion of the center land portion 32, and the bent portion Pb of the lug grooves 322A, 322B is disposed between the edge portion on the tire equatorial plane CL side of the center land portion 32 and the circumferential narrow groove 321, the first groove portion 3221 on the shoulder main groove 21 side is longer than the second groove portion 3222 on the center main groove 22 side. Additionally, each of the first groove portion 3221 and the second groove portion 3222 may have a straight shape or may have a gentle arc shape.

Additionally, a total of the extension lengths of the first groove portion 3221 and the second groove portion 3222 in the tire width direction is preferably 80% or more and more preferably 90% or more of the width Wr2 of the center land portion 32. Thus, the lug grooves 322A, 322B have a V-shape or an L-shape having an apex corresponding to the bent portion Pb.

The sum of the extension lengths of the first groove portion 3221 and the second groove portion 3222 in the tire width direction is measured as the distance in the tire width direction from the outer side end portion in the tire width direction of the first groove portion 3221 to the tire equatorial plane CL-side end portion of the second groove portion 3222.

In addition, an inclination angle β1 of the first groove portion 3221 with respect to the tire circumferential direction is preferably in the range of 45 deg ≤ β1 ≤ 70 deg and more preferably in the range of 55 deg ≤ β1 ≤ 65 deg. Additionally, an inclination angle β2 of the second groove portion 3222 is preferably in the range of 90 deg ≤ β2 ≤ 135 deg and more preferably in the range of 110 deg ≤ β2 ≤ 125 deg.

The inclination angles β1, β2 of the groove portions are each measured as the inclination angle with respect to the tire circumferential direction of a straight line connecting the bent portion Pb of the lug groove and the opening portion with respect to the main groove.

For example, in the configuration in FIG. 4, the lug grooves 322A, 322B have a V-shape with the protruding direction of the bent portion Pb oriented in the tire circumferential direction. Specifically, the inclination angle β2 of the second groove portion 3222 is in the range of 90 deg < β2, and the first groove portion 3221 and the second groove portion 3222 extend in the same direction in the tire circumferential direction from the bent portion Pb. Additionally, the first groove portion 3221 has an arc shape in which the inclination angle with respect to the tire circumferential direction (the line tangent to the groove center line) is gradually increased from the bent portion Pb toward the shoulder main groove 21 side, and the second groove portion 3222 has a straight shape.

Additionally, in the configuration in FIG. 4, the wider lug grooves 322B described below are provided with short ends 322o that connect perpendicularly to the left and right edge portions of the center land portion 32. Additionally, the end portions of the first groove portion 3221 and the second groove portion 3222 and the edge portion of the center land portion 32 are connected by these end portions 322o. In addition, the extension length L3 of each of these end portions 322o in the tire width direction is set in the range of 0 <L3/Wr2 ≤ 0.06 with respect to the width Wr2 of the center land portion 32.

Additionally, in FIG. 4, the groove widths W2 (W2A, W2B) of the lug grooves 322A, 322B are in the range of W2 ≤ 2.0 mm. Consequently, the lug grooves 322A, 322B are so-called narrow grooves. The lower limit of the groove width W2 is not particularly limited, but the lug grooves 322A, 322B need to open to function as grooves in a case where the tire contacts the ground. Thus, the lower limit of the groove width W2 is subject to restrictions by the relationship between a specified load on the tire and the groove depth.

Additionally, the center land portion 32 includes a plurality of types of the lug grooves 322A, 322B having different groove widths, and the lug grooves 322A, 322B are periodically arranged in the tire circumferential direction. Additionally, the groove width W2A of the narrowest lug groove 322A and the groove width WB of the widest lug groove 322B are preferably in the range of 1.20 ≤ W2B/W2A ≤ 2.00 and more preferably in the range of 1.25 ≤ W2B/W2A ≤ 1.80. In addition, preferably, one or more and three or less narrower lug grooves 322A are disposed between adjacent wider lug grooves 322A. For example, in the configuration in FIG. 4, the narrower lug grooves 322A and the wider lug grooves 322B are alternately arranged in the tire circumferential direction.

However, no such limitation is intended, and all of the lug grooves 322A, 322B may have the same width (not illustrated). Additionally, in the configuration in FIG. 4, the lug grooves 322A, 322B have a constant width in the groove length direction. However, no such limitation is intended, and the groove width of the lug groove may vary in the groove length direction (not illustrated).

Additionally, in FIG. 6, a groove depth H2 (H2A, H2B) of the lug grooves 322A, 322B preferably has a relationship 0.07 ≤ H2/Hg1 ≤ 0.30 and more preferably a relationship 0.07 ≤ H2/Hg1 ≤ 0.12 with the groove depth Hg1 of the shoulder main groove 21. Specifically, the lug grooves 322A, 322B are so-called narrow shallow grooves and do not completely divide the center land portion 32 in the tire circumferential direction. Thus, the rigidity of the center land portion 32 is continuously ensured in the tire circumferential direction, and in this regard, the center land portion 32 has properties as a rib rather than a block.

In the configuration illustrated in FIG. 4, each of the wider lug grooves 322A includes a groove bottom sipe 323. On the other hand, each of the narrower lug grooves 322A includes no groove bottom sipe. Thus, the lug grooves 322B including the groove bottom sipe 323 and the lug grooves 322A not including a groove bottom sipe are alternately arranged in the tire circumferential direction.

Additionally, in FIG. 6, a width W3 of the groove bottom sipe 323 is in the range of 0 < W3 ≤ 1.2 mm, and a depth H3 of the groove bottom sipe 323 is in the range of 0.50 ≤ H3/Hg1 ≤ 0.85 with respect to the groove depth Hg1 of the shoulder main groove 21. Thus, the groove bottom sipes 323 are closed in a case where the tire contacts the ground. Additionally, as illustrated in FIG. 5, the groove bottom sipe 323 opens into the shoulder main groove 21 and the center main groove 22, and has a bottom raised portion (reference sign is omitted in the drawings) in the opening portion of the groove bottom sipe.

The width of the groove bottom sipe is measured as the opening width of the sipe at the groove bottom in a case where the tire is mounted on the specified rim, inflated to the specified internal pressure, and in the unloaded state.

The depth of the groove bottom sipe is measured as a distance from the groove bottom to the sipe bottom, when the tire is mounted on the specified rim, inflated to the specified internal pressure, and in the unloaded state. Additionally, in a configuration in which a sipe includes a ridged/grooved portion on the groove bottom, the sipe depth is measured excluding this portion.

### Edge Shape of Center Land Portion

In the configuration in FIG. 2, an edge portion on the shoulder main groove 21 side of the center land portion 32 has a continuous arc shape formed by connecting, in the tire circumferential direction, a plurality of arc portions (reference sign is omitted in the drawings) projecting toward the shoulder main groove 21 side, and the edge portion on the center main groove 22 side has a straight shape parallel to the tire equatorial plane CL.

Additionally, as illustrated in FIG. 3, a pitch length Pa2 of the arc portion forming the continuous arc shape is equal to a pitch length Pr2 of the narrower lug groove 322A (or the wider lug groove 322A). Additionally, the arc portions of the pair of center land portions 32, 32 have an equal pitch length Pa2, and are disposed such that the arc portions have phases offset from each other in the tire circumferential direction. Additionally, a phase difference ϕ2 between the arc portions preferably has a relationship 0.50 ≤ ϕ2/Pa2 ≤ 0.65 with respect to the pitch length Pa2 of the arc portion. Additionally, each of the arc portions has a radius of curvature in the range of 40 mm or more and 150 mm or less (dimension symbol omitted in the drawing).

The continuous arc shape of the edge portion is configured by directly or indirectly connecting a plurality of arc portions projecting toward the shoulder main groove 21 side. In addition, each of the lug grooves 322A, 322B may open at the arc portion or the connection portion between the arc portions. For example, in the configuration of FIG. 4, at the edge portion on the shoulder main groove 21 side of the center land portion 32, the narrower lug groove 322A opens at the connection portion between the adjacent arc portions, and the wider lug groove 322A opens at the maximum projection position of the arc portion.

Additionally, in FIG. 4, a circumferential length La2 of one arc portion preferably has a relationship 0.90 ≤ La2/Pa2 and more preferably has a relationship 0.94 ≤ La2/Pa2 with respect to the pitch length Pa2 of the arc portion. The upper limit of the ratio La2/Pa2 is 1.00.

In FIG. 4, the pitch length Pa2 of the arc portion preferably has a relationship 0.60 ≤ Pa2/Wr2 ≤ 1.00 and more preferably a relationship 0.75 ≤ Pa2/Wr2 ≤ 0.95 with respect to the width Wr2 of the center land portion 32.

Additionally, in FIG. 4, an amplitude Ae of the continuous arc shape preferably has a relationship 0.03 ≤ Ae/Wr2 ≤ 0.07 and more preferably a relationship 0.04 ≤ Ae/Wr2 ≤ 0.06 with respect to the width Wr2 of the center land portion 32.

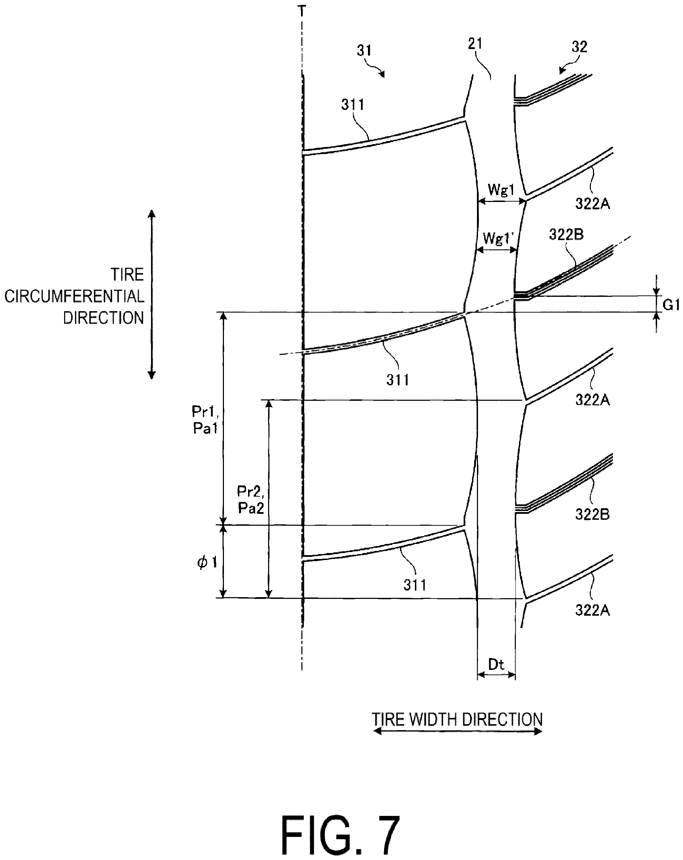

FIG. 7 is a plan view illustrating a tread portion shoulder region of the pneumatic tire illustrated in FIG. 2.

In the configuration in FIG. 2, as described above, the outer side edge portion in the tire width direction of the center land portion 32 has a continuous arc shape formed by connecting a plurality of arc portions (reference sign is omitted in the drawings) projecting toward the shoulder main groove 21 side. Similarly, the edge portion of the shoulder land portion 31 has a continuous arc shape formed by connecting the plurality of arc portions (reference sign is omitted in the drawings) projecting toward the shoulder main groove 21 side. Thus, the left and right edge portions of the shoulder main groove 21 have a plurality of arc portions protruding toward the shoulder main groove 21 side.

Additionally, the arc portions of the shoulder land portion 31 and the arc portions of the center land portion 32 are disposed with the phases of the arc portions offset from each other in the tire circumferential direction. Specifically, the pitch length Pa1 of the arc portion of the shoulder land portion 31 is set substantially identical to the pitch length Pa2 of the arc portion of the center land portion 32, and the arc portions of the shoulder land portion 31 are arranged with respect to the arc portions of the center land portion 32 with a phase difference ϕ1 between the arc portion of the shoulder land portion 31 and the arc portion of the center land portion 32. Additionally, the phase difference ϕ1 between the arc portion of the shoulder land portion 31 and the arc portion of the center land portion 32 is preferably in the range of 0.40 ≤ ϕ1/Pa1 ≤ 0.50 with respect to the pitch length Pa1 of the arc portion of the shoulder land portion 31. Additionally, the arc portions of the shoulder land portion 31 each have a radius of curvature in the range of 40 mm or more and 150 mm or less (dimension symbol omitted in the drawing).

Additionally, due to the configuration described above, the distance between the left and right groove walls of the shoulder main groove 21 continuously increases or decreases in the tire circumferential direction. Specifically, the distance between the groove walls of the shoulder main groove 21 takes a local maximum value (or a maximum value Wg1) at the connection portion between the arc portions adjacent in the tire circumferential direction, and a local minimum value (or a minimum value Wg1') at a position where the arc portions of the left and right land portions 31, 32 face one another. Additionally, the arc portions of the left and right land portions 31, 32 are continuously connected in the tire circumferential direction toward the tire circumferential direction, and thus the distance between the groove walls of the shoulder main grooves 21 increases or decreases periodically and smoothly in the tire circumferential direction. This reduces air column resonance occurring in the shoulder main grooves 21, improving the pass-by noise performance of the tire.

As illustrated in FIG. 7, the shoulder main groove 21 has a see-through structure in the tire circumferential direction. In other words, the edge portions of the left and right land portions 31, 32 do not overlap in the tire width direction in a projection view in the tire circumferential direction. Additionally, a see-through width Dt of the shoulder main groove 21 and the maximum groove width Wg1 preferably have a relationship 0.60 ≤ Dt/Wg1 ≤ 0.90 and more preferably have a relationship 0.70 ≤ Dt/Wg1 ≤ 0.80. As a result, the wet performance of the tire is improved.

The see-through width Dt is measured as the distance Dt in the tire width direction at the maximum width positions of the left and right land portions.

As illustrated in FIG. 7, the shoulder land portion 31 includes the plurality of narrow shallow grooves 311. The lug grooves 311 are disposed at predetermined intervals in the tire circumferential direction. Thus, the wet traction characteristics of the tire are improved. Additionally, the lug grooves 311 are narrow grooves and have a groove width of, 0.5 mm or more and 2.0 mm (dimension symbol omitted in the drawing). The lower limit described above ensures the effect of improving wet traction characteristics due to the lug grooves 311, and the upper limit described above suppresses degradation of the tire rolling resistance caused by the lug grooves 311.

Additionally, the lug grooves 311 are shallow grooves, and have a groove depth (not illustrated) that is 7% or more and 20% or less of the groove depth Hg1 of the shoulder main grooves 21 (see FIG. 5). The lower limit described above ensures the effect of improving wet traction characteristics due to the lug grooves 311, and the upper limit described above suppresses degradation of the tire noise performance caused by the lug grooves 311.

Additionally, as illustrated in FIG. 7, the opening portions of the lug grooves 311 in the shoulder land portion 31 with respect to the shoulder main groove 21 and the opening portions of the wider lug grooves 322B in the center land portion 32 with respect to the shoulder main groove 21 are disposed such that the opening portion of each of the lug grooves 311 faces the opening portion of the corresponding wider lug groove 322B. In this case, the distance G1 between the opening portions of the lug grooves 311, 322B in the tire circumferential direction is in the range of 0.08 ≤ G1/Pr1 ≤ 0.12 with respect to the pitch length Pr1 of the lug groove 311 in the shoulder land portion 31. Accordingly, the opening portions of the lug grooves 311, 322B are disposed such that the opening portions of the lug grooves 311 are slightly offset from the opening portions of the corresponding lug grooves 322B in the tire circumferential direction. Accordingly, degradation of noise performance of the tire is suppressed. On the other hand, in the configuration in FIG. 7, each of the wider lug grooves 322A in the center land portion 32 is disposed on the extension line of the groove center line of the corresponding lug groove 311 in the shoulder land portion 31. Thus, drainage action due to the lug grooves 311, 322B is improved.

### Modified Examples

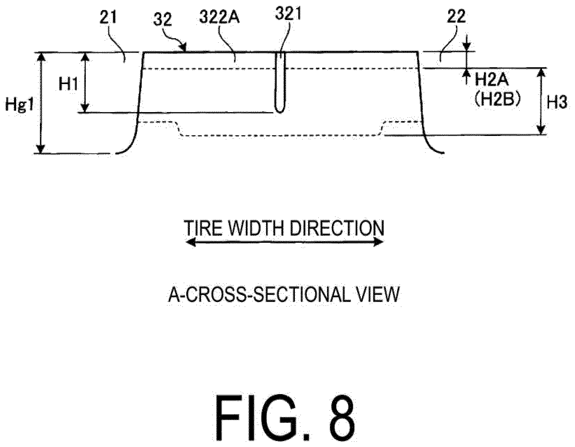

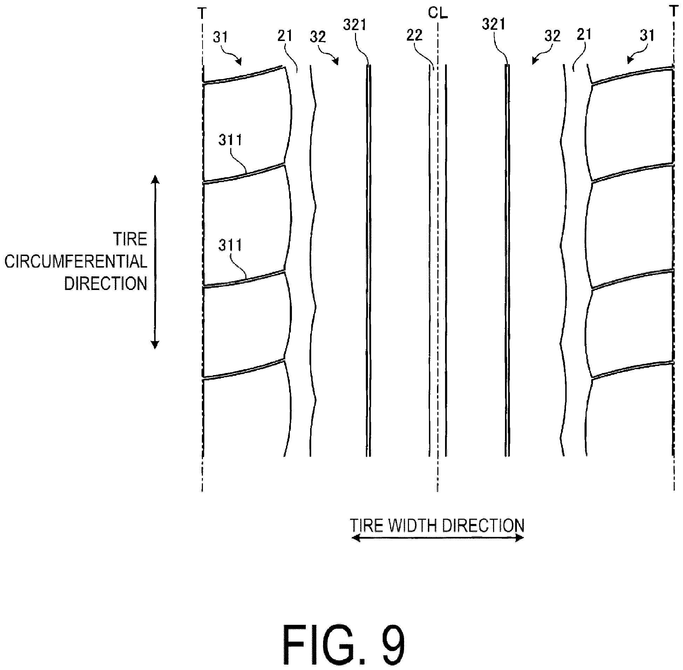

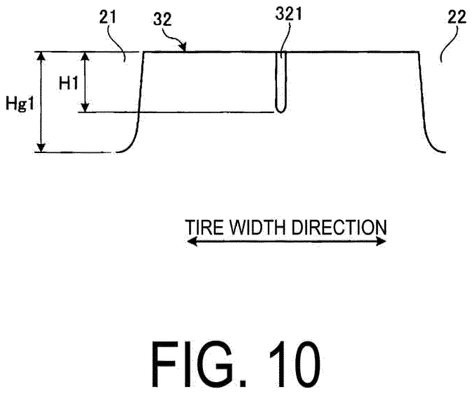

FIGS. 8 to 10 are explanatory diagrams illustrating a modified example of the center land portion illustrated in FIG. 2. FIG. 8 is a cross-sectional view of the center land portion 32 in a first modified example, and FIGS. 9 and 10 illustrate a tread plan view (FIG. 9) and a cross-sectional view of the center land portion 32 in a second modified example (FIG. 10).

In the configuration in FIG. 2, as illustrated in FIG. 4, the center land portion 32 includes a single circumferential narrow groove 321 and a plurality of lug grooves 322A, 322B, and as illustrated in FIGS. 5 and 6, both the circumferential narrow groove 321 and the lug grooves 322A, 322B are narrow shallow grooves and have a very shallow depth with respect to the shoulder main grooves 21.

However, no such limitation is intended, and in the configuration of FIG. 2, the circumferential narrow groove 321 may be a narrow deep groove, and the lug grooves 322A, 322B may be narrow shallow grooves as illustrated in the modified example in FIG. 8. In this case, the groove depth H1 of the circumferential narrow groove 321 may have a relationship 0.30 ≤ H1/Hg1 ≤ 1.00 with respect to the groove depth Hg1 of the shoulder main groove 21.

Furthermore, as in the modified examples in FIGS. 9 and 10, in a configuration in which the circumferential narrow groove 321 is a narrow deep groove, the lug grooves 322A, 322B in the center land portion 32 may be omitted. With such a configuration, the effect of improving the uneven wear performance of the tire is ensured due to the effect of distributing the ground contact pressure due to the circumferential narrow groove 321.

### Effects

As described above, the pneumatic tire 1 includes the pair of shoulder main grooves 21, 21 and the single center main groove 22, and the pair of shoulder land portions 31, 31 and the pair of center land portions 32, 32 defined by the main grooves 21, 22 (see FIG. 2). Additionally, the groove width Wg2 of the center main groove 22 has a relationship Wg2 < Wg1 with the groove width Wg1 of the shoulder main groove 21. The distance Wce between the outer side edge portions in the tire width direction of the pair of center land portions 32, 32 has a relationship 0.50 ≤ Wce/TW with the tread width TW. Additionally, the width Wr2 of the center land portion 32 has a relationship 0.23 ≤ Wr2/TW ≤ 0.27 with the tread width TW. Additionally, the center land portion 32 includes circumferential narrow grooves 321 that extend in the tire circumferential direction.

With such configuration, (1) compared to a configuration with two main grooves (not illustrated), the configuration with the three main grooves 21, 22 ensures the wet performance of the tire, and compared to a configuration with four main grooves (not illustrated), ensures the wear resistance performance of the tire. This has the advantage of providing both wet performance and wear resistance performance of the tire in a compatible manner.

Additionally, (2) the center main groove 22 is set narrower than the shoulder main groove 21 (Wg2 < Wg1), and the ground contact width of the tread portion center region is set being large (0.50 ≤ Wce/TW and 0.23 ≤ Wr2/TW), and thus the rigidity of the center land portion 32 located at a direct ground contact position is reinforced. This has the advantage of improving the wear resistance performance and the low rolling resistance performance of the tire.

On the other hand, in a configuration generally provided with a wide center land portion, there is a new problem in that uneven wear such as rail wear is likely to occur because the tread portion center region has a large ground contact pressure difference. In this regard, in the configuration described above, (3) the center land portion 32 includes the circumferential narrow groove 321, and thus the ground contact pressure in the tread portion center region is distributed by the circumferential narrow groove 321. This has the advantage of making the ground contact pressure distribution within the tire ground contact surface uniform, improving the uneven wear performance of the tire.

Additionally, in the pneumatic tire 1, the groove width Wg2 of the center main groove 22 has a relationship 0.02 ≤ Wg2/TW ≤ 0.04 with the tread width TW (see FIG. 2). The lower limit described above has the advantage of ensuring the drainage properties of the center main groove 22 to ensure the wet traction performance of the tire. Additionally, the upper limit described above has the advantage of ensuring the ground contact width of the tread portion center region to ensure the effect of reducing rolling resistance.

Additionally, in the pneumatic tire 1, a groove width W1 (see FIG. 4) of the circumferential narrow groove 321 is in the range of 0.5 mm ≤ W1 ≤ 2.0 mm. The lower limit described above has the advantage of ensuring the effect of distributing the ground contact pressure due to the circumferential narrow groove 321. and the upper limit described above has the advantage of ensuring the ground contact width of the tread portion center region and ensuring the effect of improving the wear resistance performance and the low rolling resistance performance of the tire.

Additionally, in the pneumatic tire 1, the distance L1 from an edge portion of the center land portion 32 to the groove center line of the circumferential narrow groove 321 has a relationship 0.40 ≤ L1/Wr2 ≤ 0.60 with the width Wr2 of the center land portion 32 (see FIG. 4). In such a configuration, the circumferential narrow groove 321 is disposed in the center portion of the center land portion 32, and this has the advantage of effectively distributing the ground contact pressure of the wider center land portion 32.

Additionally, in the pneumatic tire 1, the groove depth H1 of the lug groove 321 has a relationship 0.07 ≤ H1/Hg1 ≤ 0.30 with the groove depth Hg1 of the center main groove 22 (see FIG. 5). The lower limit described above has the advantage of ensuring a drainage function due to the circumferential narrow groove 321, and the upper limit described above has the advantage of suppressing a decrease in rigidity of the center land portion 32 caused by the arrangement of the circumferential narrow grooves 321. In particular, in a configuration in which the center land portion 32 includes the lug grooves 322A, 322B (see FIG. 2), the rigidity of the center land portion 32 is properly ensured because the circumferential narrow grooves 321 are shallow grooves.

Additionally, in the pneumatic tire 1, the edge portion on the shoulder main groove 21 side of the center land portion 32 has a continuous arc shape formed by connecting, in the tire circumferential direction, a plurality of arc portions projecting toward the shoulder main grooves 21 side (see FIG. 2). This has the advantage of increasing circumferential components of the edge portions of the center land portion 32 to improve the wet traction characteristics of the tire.

Additionally, in the pneumatic tire 1, the circumferential length La2 of the arc portion of the center land portion 32 has a relationship 0.90 ≤ La2/Pa2 ≤ 1.00 with the pitch length Pa2 of the arc portion (see FIG. 4). This has the advantage of properly ensuring the circumferential length La2 of the arc portion.

Additionally, in the pneumatic tire 1, the pitch length Pa2 of the arc portion of the center land portion 32 has a relationship 0.60 ≤ Pa2/Wr2 ≤ 1.00 with the width Wr2 of the center land portion 32 (see FIG. 4). This has the advantage of properly ensuring the pitch length Pa2 of the arc portion.

Additionally, in the pneumatic tire 1, the amplitude Ae of the continuous arc shape of the center land portion 32 has a relationship 0.03 ≤ Ae/Wr2 ≤ 0.07 with the width Wr2 of the center land portion 32 (see FIG. 4). This has the advantage of making the amplitude Ae of the continuous arc shape appropriate.

Additionally, in the pneumatic tire 1, the edge portions on the shoulder main groove 21, 21 sides of the pair of center land portions 32, 32 each have a continuous arc shape (see FIG. 3). A phase difference ϕ2 between the continuous arc shapes of the pair of center land portions 32, 32 has a relationship 0.50 ≤ ϕ2/Pa2 ≤ 0.65 with respect to the pitch length Pa2 of the arc portion. Such a configuration has the advantage of disposing the continuous arc shapes of the left and right center land portions 32, 32 such that the phases of the continuous arc shapes are shifted from each other, improving the noise performance of the tire.

Additionally, in the pneumatic tire 1, the center land portion 32 is provided with a plurality of types of lug grooves 322A, 322B extending through the center land portion 32 in the tire width direction and having different groove widths (see FIG. 4). In addition, the narrower lug grooves 322A open at the connection portion between the adjacent arc portions. Additionally, each of the wider lug grooves 322B opens at the maximum projection position of the arc portion. Such a configuration has the advantage of ensuring the rigidity of the center land portion 32 because the lug groove 322A opening at the connection portion between the arc portions (that is, the position where the center land portion 32 is narrower) has a narrower structure. Additionally, the lug groove 322B opens at the maximum projection position of the arc portion, and this has the advantage of increasing the circumferential components of the lug grooves 322B, improving the wet traction properties of the tire.

Additionally, in the pneumatic tire 1, the edge portion of the shoulder land portion 31 has a continuous arc shape formed by connecting the plurality of arc portions projecting toward the shoulder main groove 21 side (see FIG. 7). Additionally, the arc portions of the shoulder land portion 31 and the arc portions of the center land portion 32 are disposed with the phases of the arc portions offset from each other in the tire circumferential direction. In such a configuration, the left and right edges of the shoulder main grooves 21 have continuous arc shapes, and the continuous arc shapes are disposed such that the phases of the continuous arc shapes are shifted from each other, thus periodically increasing and reducing the groove width of the shoulder main grooves 21 in the tire circumferential direction. This is advantageous because the noise performance of the tire is improved.

Additionally, in the pneumatic tire 1, the width Wr2 of the center land portion 32 has a relationship 1.30 ≤ Wr2/Wr1 ≤ 1.80 with the width Wr1 of the shoulder land portion 31. Consequently, this has the advantage of setting the width Wr2 of the center land portion 32 relatively large, improving the wear resistance performance and the low rolling resistance performance of the tire.

Additionally, in the pneumatic tire 1, the shoulder land portion 31 includes the plurality of narrow shallow grooves 311. In addition, the groove width of each of the lug grooves 311 is in the range of 0.5 mm or more and 2.0 mm or less, and the groove depth of the lug groove 311 is in the range of 7% or more and 20% or less of the groove depth of the shoulder main groove 21. This has the advantage of ensuring the wet traction performance, low rolling resistance performance, and noise performance of the tire are assured.

Additionally, the pneumatic tire 1 is a heavy duty tire, and the center main groove 22 has a groove width of 6.0 mm or more and a groove depth of 10 mm or more. Thus, targeting the heavy duty tires for application has the advantage of efficiently achieving the effect of improving the wear resistance performance and the low rolling resistance performance of the tire.

### Example

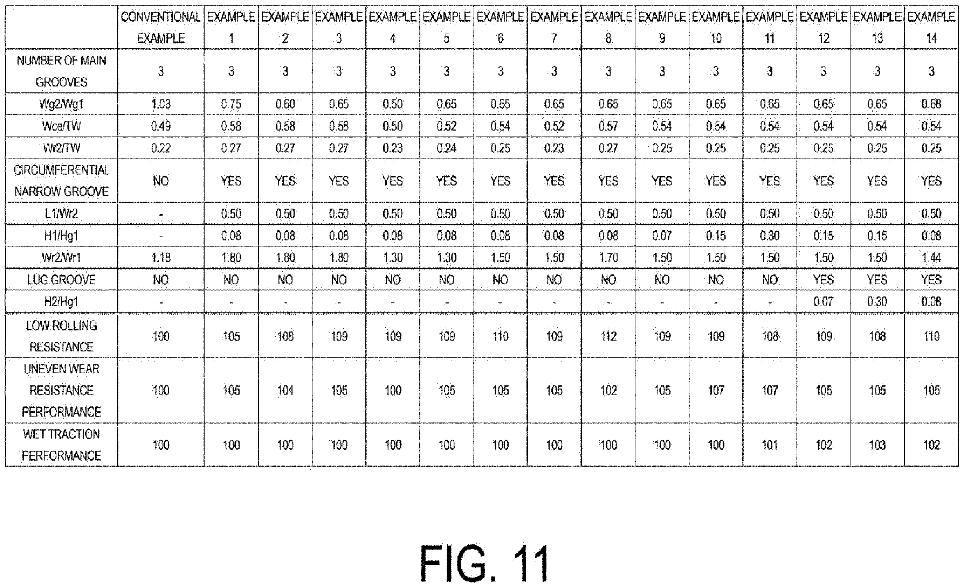

FIG. 11 is a table showing results of performance tests of pneumatic tires according to embodiments of the invention.

In the performance tests, (1) low rolling resistance performance, (2) wet traction performance, and (3) uneven wear resistance performance were evaluated for a plurality of types of test tires. Additionally, test tires having a tire size of 275/70R22.5 were mounted on rims having a rim size of 22.5×8.25, and an internal pressure of 900 kPa and a load specified by JATMA were applied to the test tires. Furthermore, the test tires were mounted on all wheels of a 2-D4 truck serving as a test vehicle.

(1) Evaluation of low rolling resistance and (2) wet traction performance was performed in accordance with R117-02 (Regulation No. 117 02 Series) certification test. Evaluation was carried out by expressing the measurement results as index values with the results of Conventional Example being defined as the reference (100). In this evaluation, larger values are more preferable.

(3) In the evaluation of uneven wear resistance performance, after the test vehicle traveled 30000 km in road tests, the amount of estimated wear life and the amount of rail wear were measured. Evaluation was carried out by expressing the measurement results as index values with the results of Conventional Example being defined as the reference (100). In this evaluation, larger values are more preferable.

As illustrated in FIGS. 1 to 4, the test tire of Example 1 included three circumferential main grooves 21, 22 and four rows of land portions 31, 32. Additionally, the center land portion 32 included the circumferential narrow groove 321 and the plurality of lug grooves 322A, 322B. Additionally, the tread width TW was 242 mm, and the groove depth Hg1 of the shoulder main grooves 21 was 18.4 mm. Additionally, the groove width W1 of the circumferential narrow groove 321 was 1.5 mm, and the groove widths W2A, W2B of the lug grooves 322A, 322B were 1.2 mm and 2.0 mm.

In the test tire of the Conventional Example, in the configuration in FIGS. 1 to 4, the center land portion 32 did not include the circumferential narrow grooves 321.

As can be seen from the test results, the test tires in Examples 1 to 14 provide low rolling resistance performance, wet traction performance, and uneven wear resistance performance in a compatible manner.

### Reference Signs List

1 Pneumatic tire
11 Bead core
12 Bead filler
13 Carcass layer
14 Belt layer
141, 12 Cross belt
15 Tread rubber
16 Sidewall rubber
17 Rim cushion rubber
21 Shoulder main groove
22 Center main groove
31 Shoulder land portion
311 Lug groove
32 Center land portion
321 Circumferential narrow groove
322A, 322B, 322B' Lug groove
322o End portion
323 Groove bottom sipe
3221 First groove portion
3222 Second groove portion

## Claims

1. A pneumatic tire (1) comprising:
a pair of shoulder main grooves (21) and a single center main groove (22); and
a pair of shoulder land portions (31) and a pair of center land portions (32) that are defined by the main grooves (21, 22),
a groove width Wg2 of the center main groove (22) having a relationship Wg2 < Wg1 and 0.60 ≤ Wg2/Wg1 ≤ 0.75 with a groove width Wg1 of the shoulder main groove (21),
a distance Wce between outer side edge portions in a tire width direction of the pair of center land portions (32) having a relationship 0.50 ≤ Wce/TW with a tread width TW,
a width Wr2 of the center land portion (32) having a relationship 0.23 ≤ Wr2/TW ≤ 0.27 with the tread width TW, and
the center land portion (32) comprising a circumferential narrow groove (321) extending in a tire circumferential direction, wherein a groove width W1 of the circumferential narrow groove (321) is in a range of 0.5 mm ≤ W1 ≤ 2.0 mm.

2. The pneumatic tire (1) according to claim 1, wherein the groove width Wg2 of the center main groove (22) has a relationship 0.02 ≤ Wg2/TW ≤ 0.04 with the tread width TW.

3. The pneumatic tire (1) according to claim 1 or 2, wherein a distance L1 from an edge portion on a tire equatorial plane side of the center land portion (32) to a groove center line of the circumferential narrow groove (321) has a relationship 0.40 ≤ L1/Wr2 ≤ 0.60 with the width Wr2 of the center land portion (32).

4. The pneumatic tire (1) according to any one of claims 1 to 3, wherein a groove depth H1 of the circumferential narrow groove (321) has a relationship 0.07 ≤ H1/Hg1 ≤ 0.30 with a groove depth Hg1 of the shoulder main groove (21).

5. The pneumatic tire (1) according to any one of claims 1 to 4, wherein an edge portion on the shoulder main groove side of the center land portion (32) has a continuous arc shape formed by connecting, in the tire circumferential direction, a plurality of arc portions projecting toward the shoulder main groove side.

6. The pneumatic tire (1) according to any of claims 1 to 5, wherein a circumferential length La2 of the arc portion of the center land portion (32) has a relationship 0.90 ≤ La2/Pa2 ≤ 1.00 with a pitch length Pa2 of the arc portion.

7. The pneumatic tire (1) according to any of claims 1 to 6, wherein the pitch length Pa2 of the arc portion of the center land portion (32) has a relationship 0.60 ≤ Pa2/Wr2 ≤ 1.00 with the width Wr2 of the center land portion (32).

8. The pneumatic tire (1) according to any one of claims 1 to 7, wherein an amplitude Ae of the continuous arc shape of the center land portion (32) has a relationship 0.03 ≤ Ae/Wr2 ≤ 0.07 with the width Wr2 of the center land portion (32).

9. The pneumatic tire (1) according to any one of claims 1 to 8, wherein
edge portions on the shoulder main groove sides of the pair of center land portions (32) each have the continuous arc shape, and
a phase difference ϕ2 between the continuous arc shapes of the pair of center land portions (32) has a relationship 0.50 ≤ ϕ2/Pa2 ≤ 0.65 with the pitch length Pa2 of the arc portion.

10. The pneumatic tire (1) according to any one of claims 1 to 9, wherein
the center land portion (32) comprises a plurality of types of the lug grooves (311) extending through the center land portion (32) in the tire width direction and having different groove widths,
narrower lug grooves (322A) included in the plurality of types of lug grooves open at a connection portion between the arc portions adjacent to each other, and
wider lug grooves (322B) included in the plurality of types of lug grooves open at a maximum projection position of the arc portion.

11. The pneumatic tire (1) according to any one of claims 1 to 10, wherein
an edge portion of the shoulder land portion (31) has a continuous arc shape formed by connecting a plurality of arc portions projecting toward the shoulder main groove side, and
the arc portions of the shoulder land portion (31) and the arc portions of the center land portion (32) are disposed with phases of the arc portions offset from each other in the tire circumferential direction.

12. The pneumatic tire (1) according to any one of claims 1 to 11, wherein a width Wr2 of the center land portion (32) has a relationship 1.30 ≤ Wr2/Wr1 ≤ 1.80 with respect to a width Wr1 of the shoulder land portion (31).

13. The pneumatic tire (1) according to any one of claims 1 to 12, wherein
the shoulder land portion (31) comprises a plurality of lug grooves,
a groove width of the lug groove (311) is in a range of 0.5 mm or more and 2.0 mm or less, and
a groove depth of the lug groove (311) is in a range of 7% or more and 20% or less of a groove depth of the shoulder main groove (21).

14. The pneumatic tire (1) according to any one of claims 1 to 13, wherein the pneumatic tire (1) is a heavy duty tire, and the center main groove (22) has a groove width of 6.0 mm or more and a groove depth of 10 mm or more.

## Patentansprüche

1. Luftreifen (1), umfassend:
ein Paar Schulterhauptrillen (21) und eine einzelne zentrale Hauptrille (22); und
ein Paar Schulterstegabschnitte (31) und ein Paar zentrale Stegabschnitte (32), die durch die Hauptrillen (21, 22) bestimmt sind,
eine Rillenbreite Wg2 der zentralen Hauptrille (22), die ein Verhältnis Wg2 < Wg1 und 0,60 ≤ Wg2/Wg1 ≤ 0,75 mit einer Rillenbreite Wg1 der Schulterhauptrille (21) aufweist,
einen Abstand Wce zwischen äußeren Seitenrandabschnitten in Reifenbreitenrichtung des Paars zentraler Stegabschnitte (32), der ein Verhältnis 0,50 ≤ Wce/TW mit einer Laufflächenbreite TW aufweist,
eine Breite Wr2 des zentralen Stegabschnitts (32), die eine Beziehung 0,23 ≤ Wr2/TW ≤ 0,27 mit der Laufflächenbreite TW aufweist, und
der zentrale Stegabschnitt (32) umfassend eine schmale Umfangsrille (321), die sich in Reifenumfangsrichtung erstreckt, wobei eine Rillenbreite W1 der schmalen Umfangsrille (321) in einem Bereich von 0,5 mm ≤ W1 ≤ 2,0 mm liegt.

2. Luftreifen (1) gemäß Anspruch 1, wobei die Rillenbreite Wg2 der zentralen Hauptrille (22) ein Verhältnis 0,02 ≤ Wg2/TW ≤ 0,04 mit der Laufflächenbreite TW aufweist.

3. Luftreifen (1) gemäß Anspruch 1 oder 2, wobei ein Abstand L1 von einem Randabschnitt auf einer Äquatorialebene des Reifens des zentralen Stegabschnitts (32) zu einer Rillenzentrallinie der schmalen Umfangsrille (321) ein Verhältnis 0,40 ≤ L1/Wr2 ≤ 0,60 mit der Breite Wr2 des zentralen Stegabschnitts (32) aufweist.

4. Luftreifen (1) gemäß einem der Ansprüche 1 bis 3, wobei eine Rillentiefe H1 der schmalen Umfangsrille (321) ein Verhältnis 0,07 ≤ H1/Hg1 ≤ 0,30 mit einer Rillentiefe Hg1 der Schulterhauptrille (21) aufweist.

5. Luftreifen (1) gemäß einem der Ansprüche 1 bis 4, wobei ein Randabschnitt auf der Schulterhauptrillenseite des zentralen Stegabschnitts (32) eine durchgängige Bogenform aufweist, die durch Verbinden, in Reifenumfangsrichtung, einer Mehrzahl von Bogenabschnitten, die zu der Schulterhauptrillenseite hin vorspringen, ausgebildet wird.

6. Luftreifen (1) gemäß einem der Ansprüche 1 bis 5, wobei eine Umfangslänge La2 des Bogenabschnitts des zentralen Stegabschnitts (32) ein Verhältnis 0,90 ≤ La2/Pa2 ≤ 1,00 mit einer Teilungsabstandslänge Pa2 des Bogenabschnitts aufweist.

7. Luftreifen (1) gemäß einem der Ansprüche 1 bis 6, wobei die Teilungsabstandslänge Pa2 des Bogenabschnitts des zentralen Stegabschnitts (32) ein Verhältnis 0,60 ≤ Pa2/Wr2 ≤ 1,00 mit der Breite Wr2 des zentralen Stegabschnitts (32) aufweist.

8. Luftreifen (1) gemäß einem der Ansprüche 1 bis 7, wobei eine Amplitude Ae der durchgängigen Bogenform des zentralen Stegabschnitts (32) ein Verhältnis 0,03 ≤ Ae/Wr2 ≤ 0,07 mit der Breite Wr2 des zentralen Stegabschnitts (32) aufweist.

9. Luftreifen (1) gemäß einem der Ansprüche 1 bis 8, wobei
Randabschnitte auf den Schulterhauptrillenseiten des Paars zentraler Stegabschnitte (32) je die durchgängige Bogenform aufweisen und
eine Phasendifferenz ϕ2 zwischen den durchgängigen Bogenformen des Paars zentraler Stegabschnitte (32) ein Verhältnis 0,50 ≤ ϕ2/Pa2 ≤ 0,65 mit der Teilungsabstandslänge Pa2 des Bogenabschnitts aufweist.

10. Luftreifen (1) gemäß einem der Ansprüche 1 bis 9, wobei
der zentrale Stegabschnitt (32) eine Mehrzahl von Arten von Stollenrillen (311), die sich über den zentralen Stegabschnitt (32) in Reifenbreitenrichtung erstrecken und unterschiedliche Rillenbreiten aufweisen, umfasst,
schmalere Stollenrillen (322A), die in der Mehrzahl von Arten von Stollenrillen eingeschlossen sind, sich an einem Verbindungsabschnitt zwischen den einander angrenzenden Bogenabschnitten öffnen und
breitere Stollenrillen (322B), die in der Mehrzahl von Arten von Stollenrillen eingeschlossen sind, sich bei einer maximalen Vorsprungsposition des Bogenabschnitts öffnen.

11. Luftreifen (1) gemäß einem der Ansprüche 1 bis 10, wobei
ein Randabschnitt des Schulterstegabschnitts (31) eine durchgängige Bogenform aufweist, die durch Verbinden einer Mehrzahl von Bogenabschnitten, die zu der Schulterhauptrillenseite hin vorspringen, ausgebildet wird, und
die Bogenabschnitte des Schulterstegabschnitts (31) und die Bogenabschnitte des zentralen Stegabschnitts (32) mit Phasen der Bogenabschnitte, die in Reifenumfangsrichtung voneinander versetzt sind, angeordnet sind.

12. Luftreifen (1) gemäß einem der Ansprüche 1 bis 11, wobei eine Breite Wr2 des zentralen Stegabschnitts (32) ein Verhältnis 1,30 ≤ Wr2/Wr1 ≤ 1,80 in Bezug auf eine Breite Wr1 des Schulterstegabschnitts (31) aufweist.

13. Luftreifen (1) gemäß einem der Ansprüche 1 bis 12, wobei
der Schulterstegabschnitt (31) eine Mehrzahl von Stollenrillen umfasst,
eine Rillenbreite der Stollenrille (311) in einem Bereich von 0,5 mm oder mehr und 2,0 mm oder weniger liegt und
eine Rillentiefe der Stollenrille (311) in einem Bereich von 7 % oder mehr und 20 % oder weniger einer Rillentiefe der Schulterhauptrille (21) liegt.

14. Luftreifen (1) gemäß einem der Ansprüche 1 bis 13, wobei der Luftreifen (1) ein hochleistungsfähiger Reifen ist und die zentrale Hauptrille (22) eine Rillenbreite von 6,0 mm oder mehr und eine Rillentiefe von 10 mm oder mehr aufweist.

## Revendications

1. Bandage pneumatique (1) comprenant :
une paire de rainures principales d'épaulement (21) et une rainure principale centrale unique (22) ; et
une paire de parties de méplat d'épaulement (31) et une paire de parties de méplat centrales (32) qui sont définies par les rainures principales (21, 22),
une largeur de rainure Wg2 de la rainure principale centrale (22) ayant une relation Wg2 < Wg1 et 0,60 ≤ Wg2/Wg1 ≤ 0,75 par rapport à une largeur de rainure Wg1 de la rainure principale d'épaulement (21),
une distance Wce entre des parties de bord latéral extérieur dans une direction de largeur de pneu de la paire de parties de méplat centrales (32) ayant une relation 0,50 ≤ Wce/TW par rapport à une largeur de bande de roulement TW,
une largeur Wr2 de la partie de méplat centrale (32) ayant une relation 0,23 ≤ Wr2/TW ≤ 0,27 par rapport à la largeur de bande de roulement TW, et
la partie de méplat centrale (32) comprenant une rainure étroite circonférentielle (321) s'étendant dans une direction circonférentielle de pneu, dans lequel une largeur de rainure W1 de la rainure étroite circonférentielle (321) est dans une plage de 0,5 mm ≤ W1 ≤ 2,0 mm.

2. Bandage pneumatique (1) selon la revendication 1, dans lequel la largeur de rainure Wg2 de la rainure principale centrale (22) a une relation 0,02 ≤ Wg2/TW ≤ 0,04 par rapport à la largeur de bande de roulement TW.

3. Bandage pneumatique (1) selon la revendication 1 ou 2, dans lequel une distance L1 d'une partie de bord sur un côté plan équatorial de pneu de la partie de méplat centrale (32) vers une ligne centrale de rainure de la rainure étroite circonférentielle (321) a une relation 0,40 ≤ L1/Wr2 ≤ 0,60 par rapport à la largeur Wr2 de la partie de méplat centrale (32).

4. Bandage pneumatique (1) selon l'une quelconque des revendications 1 à 3, dans lequel une profondeur de rainure H1 de la rainure étroite circonférentielle (321) a une relation 0,07 ≤ H1/Hg1 ≤ 0,30 par rapport à une profondeur de rainure Hg1 de la rainure principale d'épaulement (21).

5. Bandage pneumatique (1) selon l'une quelconque des revendications 1 à 4, dans lequel une partie de bord du côté de rainure principale d'épaulement de la partie de méplat centrale (32) a une forme d'arc continu formée par liaison, dans la direction circonférentielle de pneu, d'une pluralité de parties d'arc faisant saillie vers le côté de rainure principale d'épaulement.

6. Bandage pneumatique (1) selon l'une quelconque des revendications 1 à 5, dans lequel une longueur circonférentielle La2 de la partie d'arc de la partie de méplat centrale (32) a une relation 0,90 ≤ La2/Pa2 ≤ 1,00 avec une longueur de pas P2 de la partie d'arc.

7. Bandage pneumatique (1) selon l'une quelconque des revendications 1 à 6, dans lequel la longueur de pas Pa2 de la partie d'arc de la partie de méplat centrale (32) a une relation 0,60 ≤ Pa2/Wr2 ≤ 1,00 avec la largeur Wr2 de la partie de méplat centrale (32).

8. Bandage pneumatique (1) selon l'une quelconque des revendications 1 à 7, dans lequel une amplitude Ae de la forme d'arc continue de la partie de méplat centrale (32) a une relation 0,03 ≤ Ae/Wr2 ≤ 0,07 avec la largeur Wr2 de la partie de méplat centrale (32).

9. Bandage pneumatique (1) selon l'une quelconque des revendications 1 à 8, dans lequel
des parties de bord sur les côtés de rainure principale d'épaulement de la paire de parties de méplat centrales (32) ont chacune la forme d'arc continue, et
une différence de phase ϕ2 entre les formes d'arc continues de la paire de parties de méplat centrales (32) a une relation 0,50 ≤ ϕ2/Pa2 ≤ 0,65 avec la longueur de pas Pa2 de la partie d'arc.

10. Bandage pneumatique (1) selon l'une quelconque des revendications 1 à 9, dans lequel
la partie de méplat centrale (32) comprenant une pluralité de types de rainures de barrette (311) s'étendant à travers la partie de méplat centrale (32) dans la direction de largeur de pneu et ont des largeurs de rainure différentes,
des rainures de barrette plus étroites (322A) incluses dans la pluralité de types de rainures de barrette s'ouvrent au niveau d'une partie de liaison entre les parties d'arcs à proximité les unes des autres, et
des rainures de barrette plus larges (322B) incluses dans la pluralité de types de rainures de barrette s'ouvrent au niveau d'une position de saillie maximale de la partie d'arc.

11. Bandage pneumatique (1) selon l'une quelconque des revendications 1 à 10, dans lequel
une partie de bord de la partie de méplat centrale (31) a une forme d'arc continue formée par liaison d'une pluralité de parties d'arcs faisant saillie vers le côté de rainure principale d'épaulement, et
les parties d'arcs de la partie de méplat d'épaulement (31) et les parties d'arcs de la partie de méplat centrale (32) sont disposées avec des phases des parties d'arc décalées les unes des autres dans la direction circonférentielle de pneu.

12. Bandage pneumatique (1) selon l'une quelconque des revendications 1 à 11, dans lequel une largeur Wr2 de la partie de méplat d'épaulement (32) a une relation 1,30 ≤ Wr2/Wr1 ≤ 1,80 par rapport à une largeur Wr1 de la partie de méplat d'épaulement (31).

13. Bandage pneumatique (1) selon l'une quelconque des revendications 1 à 12, dans lequel
la partie de méplat d'épaulement (31) comprend une pluralité de rainures de barrette,
une largeur de rainure de la rainure de barrette (311) est dans une plage égale ou supérieure à 0,5 mm et égale ou inférieure à 2,0 mm, et
une profondeur de rainure de la rainure de barrette (311) est dans une plage égale ou supérieure à 7 % et égale ou inférieure à 20 % d'une profondeur de rainure de la rainure principale d'épaulement (21).

14. Bandage pneumatique (1) selon l'une quelconque des revendications 1 à 13, dans lequel le bandage pneumatique (1) est un pneu poids lourd, et la rainure principale centrale (22) a une largeur de rainure égale ou supérieure à 6,0 mm et une profondeur de rainure égale ou supérieure à 10 mm.
